# FASCICULE DE BREVET EUROPEEN

(11) **EP 3 117 278 B1**
(45) Date de publication et mention de la délivrance du brevet: **31.03.2021**
(21) Numéro de dépôt: 15709186.9
(22) Date de dépôt: 11.03.2015
(51) Int. Cl.: G05B 19/4065, G05B 19/404, B24B 49/16, B25J 9/16

(54) **PROCÉDÉ ET SYSTÈME DE CONTRÔLE D'UN PONÇAGE ORBITAL**
VERFAHREN UND SYSTEM ZUR STEUERUNG EINES SCHWINGSCHLEIFERS
METHOD AND SYSTEM FOR CONTROLLING AN ORBITAL SANDER

(30) Priorité: 11.03.2014 FR 1452006
(43) Date de publication de la demande: 18.01.2017
(73) Titulaire: Universite de Nantes, 44000 Nantes (FR); Centre National de la Recherche Scientifique (CNRS), 75016 Paris (FR)
(72) Inventeur: BONNET, Samuel, F-44860 Pont-Saint-Martin (FR); FURET, Benoît, F-44300 Nantes (FR); GARNIER, Sébastien, F-06650 Le Rouret (FR); POIREE, Raphaël, F-60800 Feigneux (FR)
(74) Mandataire: Regimbeau
(86) Numéro de dépôt international: PCT/EP2015/055106
(87) Numéro de publication internationale: WO 2015/136008

(56) Documents cités:
- DE-A1- 3 310 729
- FR-A1- 2 828 424
- US-A1- 2007 031 024

## Description

L'invention concerne les techniques de ponçage orbital.

Elle trouve avantageusement application dans les domaines nautique, éolien, transport terrestre ou aéronautique, pour le ponçage de pièces de grandes dimensions, d'autres applications étant bien entendu envisageables.

### DOMAINE TECHNIQUE GENERAL ET ART ANTERIEUR

Dans la plupart des domaines industriels, la préparation de surface mécanique par abrasion, c'est-à-dire le ponçage ou le polissage, est réalisée principalement au moyen d'appareils portatifs. Ces tâches manuelles sont pénibles (gestes répétitifs engendrant des troubles musculo-squelettiques). En raison d'un différentiel important des montants financiers associés à la main d'œuvre qualifiée requise entre les pays dits « industrialisés » et les pays dits « low cost », elles ont un impact conséquent sur le prix de revient du produit final. Bien que de nombreuses opérations de production comme le détourage ou le perçage sont aujourd'hui automatisées, la préparation de surface par abrasion ne l'est pas ou peu à cause de l'absence de solutions technologiques pour remplacer le contrôle sensitif (visio-tactile ou ressenti) de l'opérateur qui ajuste en temps réel ses conditions opératoires (principalement trajectoire ou force d'appui).

Pour répondre à ces problématiques, des laboratoires et des industriels ont développé des solutions robotisées ou automatisées de ponçage basées sur un contrôle partiel des paramètres opératoires :
- La partie tournante (broche ou moteur de ponceuse) permet d'imposer la vitesse de rotation.
- Les trajectoires sont imposées par programmation (logiciel de F.A.O. Fabrication Assistée par Ordinateur) sur toute la surface de la pièce à traiter.
- Différents systèmes automatisés de gestion des efforts (compliance, mécanique ou électronique, passive ou active), installés en bout de robots, permettent d'assurer un effort fixe mais plus ou moins constant.

Cependant, certaines spécificités de ce procédé ont des conséquences sur l'uniformité et la capacité à prédire le travail réel de l'outil sur la pièce :
- L'usure de l'abrasif, et donc l'efficacité de l'abrasion ne peut être négligée, surtout dès que la surface poncée nécessite plusieurs changements d'abrasif.
- Certains événements accidentels perturbent également l'efficacité de l'abrasion : changement brusque de courbure de la pièce, défaut de trajectoire du robot, encrassement de l'abrasif...

Ainsi, les solutions actuellement proposées ne sont pas adaptées et nécessitent un temps non négligeable de contrôle à posteriori de la surface de la pièce par un opérateur et dans de nombreux cas, des reprises locales dues à des incidents durant le procédé automatisé. Ces pertes de temps ont des conséquences sur la rentabilité de l'automatisation et peuvent freiner l'investissement des utilisateurs potentiels. De plus, sur des pièces de grandes dimensions à forte valeur ajouté, les conséquences engendrées par un procédé mal maîtrisé ne sont pas acceptables.

A partir de travaux préalables, il a déjà été proposé, dans le domaine des machines-outils, de contrôler l'état de fonctionnement d'un outil d'usinage, et notamment son usure, en comparant la puissance active absorbée par son moteur à des seuils ou encore à des courbes de référence établies lors d'un premier usinage.

Des exemples en ce sens ont par exemple été proposés dans les demandes de brevet FR2828424 et FR2881068.

Les techniques décrites dans ces demandes sont proposées dans le cadre d'outils permettant un usinage brut (forêt de perçage par exemple) et ne sont pas adaptées au suivi d'un ponçage orbital

Le document DE 33 10 729 A1 divulgue un procédé de surveillance d'un dispositif de ponçage.

### PRESENTATION DE L'INVENTION

Un but de l'invention est de proposer un procédé et système de contrôle qui permette la surveillance de la qualité de l'abrasion réalisée par une ponceuse orbitale.

Un autre but de l'invention est de proposer un procédé et un système de contrôle qui permette une cartographie de la qualité d'une opération de ponçage orbital.

Un autre but encore de l'invention est de proposer un système de contrôle qui permette de détecter des incidents lors d'une opération de ponçage orbital.

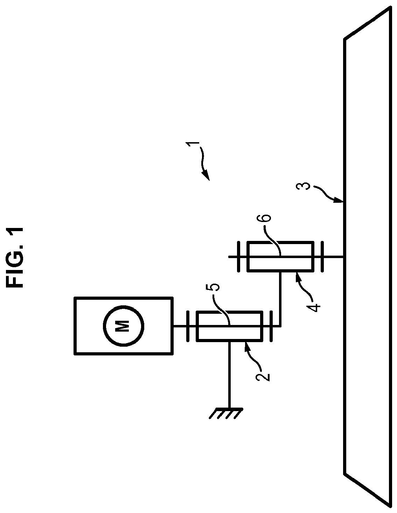

On a illustré schématiquement sur la figure 1 la structure cinématique d'une ponceuse orbitale. Une telle ponceuse est une machine tournante qui comporte un moteur M, un excentrique 2 lié à l'arbre du moteur M et un plateau 3 de ponçage fixé sur l'excentrique 2 par une liaison pivot 4.

La machine ainsi représentée comporte donc deux axes :
- l'un 5 qui est l'axe de rotation piloté de l'excentrique 2,
- l'autre 6 qui est l'axe de rotation libre du plateau de ponçage 3.

Pour toute machine tournante à alimentation électrique, la puissance absorbée est liée linéairement au couple résistif (frottement, déformation plastique des micro-copeaux) et donc lors d'une opération de ponçage, au taux d'abrasion de l'outil sur la surface. Ce couple résistif et la puissance absorbée sont dépendants du matériau, de l'abrasif, de la pression appliquée sur la surface et de la vitesse de coupe de chaque grain.

Divers systèmes de compliance permettent de gérer l'effort pour que la pression appliquée à la surface soit sensiblement constante (dispersion autour de la valeur cible de l'ordre de quelques Newton).

S'agissant de la vitesse de coupe, les inventeurs ont constaté que dans le cas d'une ponceuse orbitale, la vitesse de coupe moyenne de chaque grain reste peu variable dans une plage d'efforts (ou de pressions) relativement étendue (de l'ordre de quelques dizaines de Newton pour un plateau abrasif de 150mm de diamètre et donc compatible avec les capacités d'un système de gestion d'efforts par compliance).

Ainsi, tous les paramètres opératoires (matériau, abrasif, caractéristiques du moteur, vitesse de coupe et pression appliquée sur la surface) peuvent être considérés comme stables lors d'une opération de ponçage orbital robotisé.

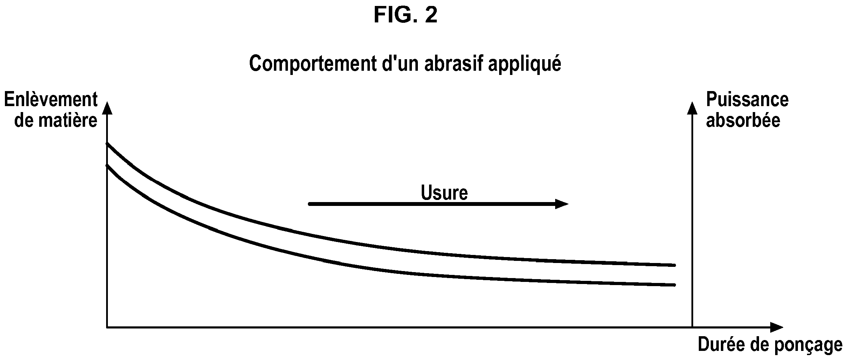

Comme l'illustre la figure 2, la puissance absorbée est alors linéairement proportionnelle au taux d'abrasion de la surface dans la plage d'utilisation normale.

Tout changement de cette linéarité au cours du travail ne peut être le résultat que d'un incident.

Dès lors, seuls l'usure de l'abrasif et des événements aléatoires (encrassement, arrachage, perte du contact matière ou au contraire prise de matière brusque) peuvent influencer le niveau d'abrasion et donc le niveau de puissance absorbée. Par conséquent, la surveillance de la puissance absorbée permet de surveiller le travail d'abrasion.

Ainsi, l'invention propose un procédé de contrôle d'un ponçage orbital robotisé selon la revendication 1.

Selon un mode de mise en œuvre, on compare la courbe de l'évolution de la puissance consommée instantanée ou des courbes fonctions de celles-ci à une ou plusieurs courbes, seuils ou motifs de référence caractéristiques de la survenue de différents incidents, ces différentes courbes ou seuils de référence ayant été préalablement déterminés lors d'une phase d'étalonnage.

Notamment, il est avantageusement possible de constituer préalablement une base de données dans laquelle différentes courbes et/ou différents seuils et/ou motifs de référence sont mémorisés pour différents types de matériaux à poncer et différents types d'abrasifs susceptibles d'être utilisés pour leur ponçage.

Le traitement de la mesure de puissance consommée instantanée permet par exemple de détecter à tout instant le long de la trajectoire un défaut d'abrasion et/ou un niveau d'usure de l'abrasif de la ponceuse et/ou un incident de pression appliquée sur l'abrasif de la ponceuse et/ou un incident d'encrassement et/ou un incident d'aspiration et/ou un incident d'arrachage ou d'absence abrasif.

Une telle détection peut déclencher en temps réel une action en réponse.

Selon un aspect du procédé proposé, il est possible d'afficher ou d'éditer, avec une échelle colorimétrique, la puissance consommée instantanée et/ou le niveau d'abrasion estimé.

La cartographie colorimétrique peut être une cartographie simplifiée.

L'invention propose également un système de contrôle selon la revendication 7.

Il propose en outre un système de ponçage orbital robotisé qui comporte un tel système de contrôle.

### PRESENTATION DES FIGURES

La description qui suit est purement illustrative et non limitative. Elle doit être lue en regard des figures annexées selon lesquelles :
- la figure 1, déjà discutée, illustre schématiquement la structure cinématique d'une machine tournante pour ponçage orbitale ;
- la figure 2 est un graphe sur lequel on a porté à la fois l'évolution de la puissance absorbée en fonction de la durée de ponçage et l'évolution de l'enlèvement de matière ;
- la figure 3 illustre schématiquement un système de ponçage intégrant un contrôleur de surveillance conforme à un mode de réalisation possible de l'invention ;
- la figure 4 est un graphe sur lequel on a porté l'évolution de la puissance absorbée et de sa dérivée en fonction de la durée de ponçage, ainsi que différentes courbes correspondant à différents seuil caractéristiques (seuil d'arrachage, seuil encrassement, seuil aspiration, seuil incident) ;
- la figure 5 est un graphe sur lequel on a porté les puissances absorbées et les niveaux d'abrasion estimés associés à une échelle colorimétrique ;
- la figure 6 illustre différentes étapes d'un mode de mise en œuvre possible pour un procédé conforme à l'invention ;
- les figures 7 et 8 illustrent des exemples de cartographie qui peuvent être obtenus dans le cadre du procédé illustré sur la figure 7.

### DESCRIPTION DETAILLEE DE PLUSIEURS MODES DE REALISATION ET DE MISE EN OEUVRE

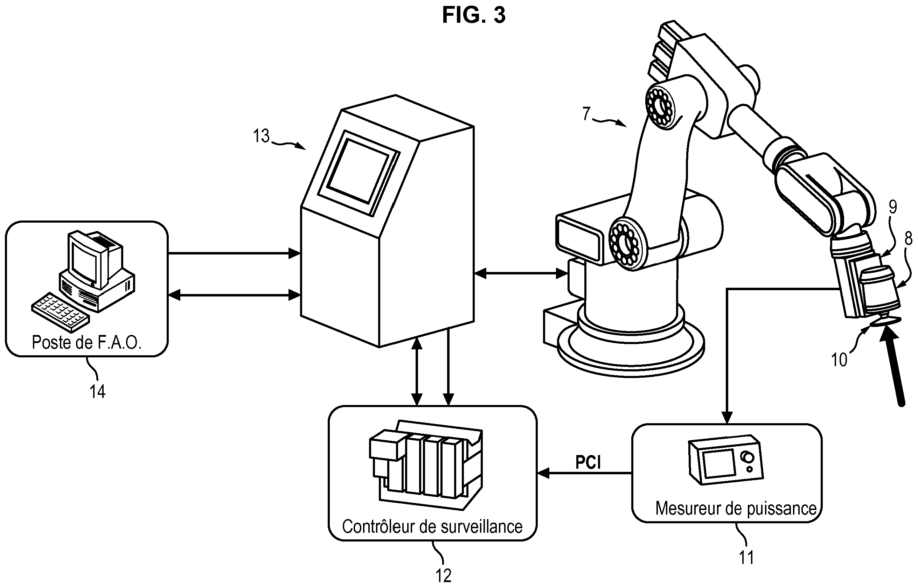

Le système instrumenté illustré sur la figure 3 comporte quant à lui un bras-robot articulé 7 sur lequel est montée une ponceuse 8 à mouvement orbital qui est du type de celle illustrée sur la figure 1.

Un système de compliance 9 permet de maintenir un effort constant entre l'abrasif 10 monté sur le plateau de la machine tournante et la pièce à poncer (flèche sur la figure 3).

La dimension du plateau de la ponceuse 8 - et donc du disque abrasif 10 - est adaptée à la courbure de la pièce. De plus, l'utilisation d'une interface en mousse permet d'uniformiser la pression de contact entre la pièce à poncer et l'abrasif 10.

Les caractéristiques de puissance du moteur de la ponceuse sont dimensionnées, comme sa vitesse de rotation de travail, pour permettre un travail en régime permanent (régime stable) en appliquant la pression cible sur l'outil abrasif 8,10.

Un mesureur de puissance 11 mesure en permanence la puissance consommée instantanée PCI du moteur de la ponceuse 8 en analysant l'alimentation électrique de celle-ci. La puissance ainsi mesurée est transmise à un contrôleur de surveillance 12 qui échange avec une unité de contrôle 13, laquelle commande le bras-robot articulé 7.

Ladite unité de contrôle 13 commande le déplacement du bras-robot 7 et de la ponceuse 8 qu'il porte en fonction de trajectoires pré-calculées au niveau d'un poste de traitement 14, qui est par exemple un poste à distance ou un poste avec lequel ladite unité 13 échange en temps réel.

Le mesureur de puissance 11 peut être de tout type connu se branchant sur l'alimentation électrique monophasée ou triphasée de la machine tournante que constitue la ponceuse 8.

Il transmet au contrôleur de surveillance 12 un signal de 0-10 V ou 4-20 mA correspondant à la puissance consommée instantanée PCI.

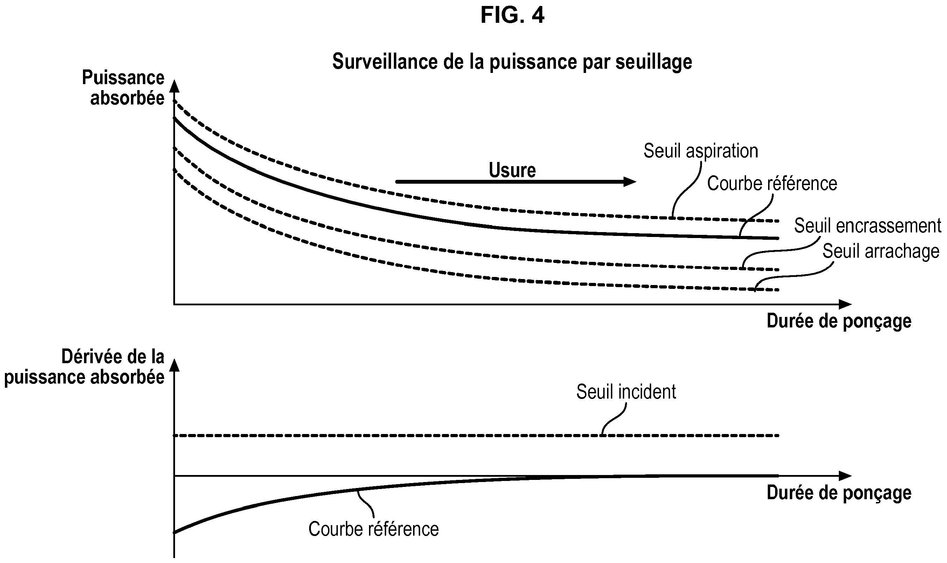

Les mesures de puissance ainsi réalisées en fonction de la durée de ponçage permettent, par comparaison avec des courbes seuils préalablement étalonnées, de détecter différents incidents quant au fonctionnement de la machine ponceuse et du procédé en lui-même (figure 4).

Ce traitement de comparaison est mis en œuvre par le contrôleur de surveillance 12 associé au contrôleur 13 du robot.

Les courbes seuils utilisées pour cette comparaison sont déterminées lors de phases d'étalonnage préalables. Chaque courbe est caractéristique d'un incident particulier :
- absence d'aspiration de l'outil,
- encrassement du papier abrasif,
- arrachage du papier abrasif,
- etc...

Des comparaisons peuvent également être mises en œuvre sur d'autres fonctions de la puissance absorbée. Par exemple, la dérivée de la puissance absorbée peut elle-même être comparée à une courbe d'étalonnage, à un ou plusieurs seuils ou encore à un ou des motifs de courbe pour détecter un éventuel incident sur le fonctionnement de la machine.

Les différentes courbes d'étalonnage utilisées dans ces traitements de comparaison sont fonction des principales caractéristiques de l'application surveillée : matériau poncé, vitesse et effort utilisés, type de ponceuse, type de papier abrasif et en particulier granulométrie de celui-ci, etc...

Elles sont transmises par le poste 14 à l'unité 13, ainsi que par ladite unité 13 au contrôleur de surveillance 12 qui lui est associé, avec les fichiers 3D fournissant la trajectoire de déplacement du bras robot 7 et de la ponceuse 8.

Le logiciel de supervision intégré au contrôleur de surveillance 12 recueille ainsi différentes informations :
- signal PCI de la puissance absorbée (puissance consommées instantanée)
- position de l'outil (ponceuse 8) par rapport à la pièce à poncer
- modèle numérique 3D de la pièce (fichier 3D fourni au contrôleur 13 du robot)
- données d'étalonnage préliminaire

A partir de ces données synchronisées en temps réel ou en post-traitement, l'afficheur du robot 13 peut informer l'opérateur relativement à d'éventuels incidents de ponçage et à leur localisation sur la pièce.

Le logiciel du contrôleur de surveillance 12 peut également communiquer avec le contrôleur 13 du robot pour provoquer une action en réponse (modification des conditions opératoires, changement d'outil abrasif, mise en attente de l'opération, demande d'intervention humaine ou autre action).

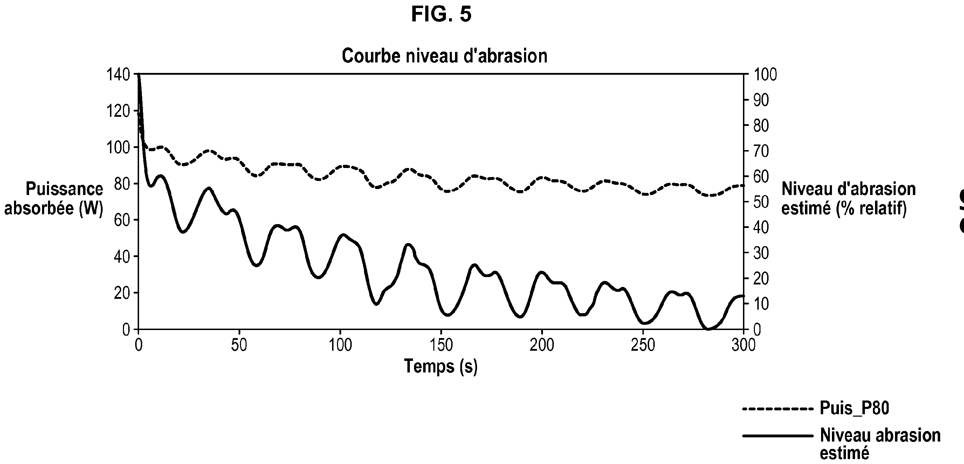

De même, cette synchronisation et l'association des niveaux de puissance absorbée à une échelle colorimétrique permettent de cartographier le travail d'abrasion estimé sur la pièce et d'afficher par exemple pour l'opérateur la puissance absorbée et le niveau d'abrasion estimé en les présentant par rapport à une échelle colorimétrique (figure 5) ou autre type de représentation.

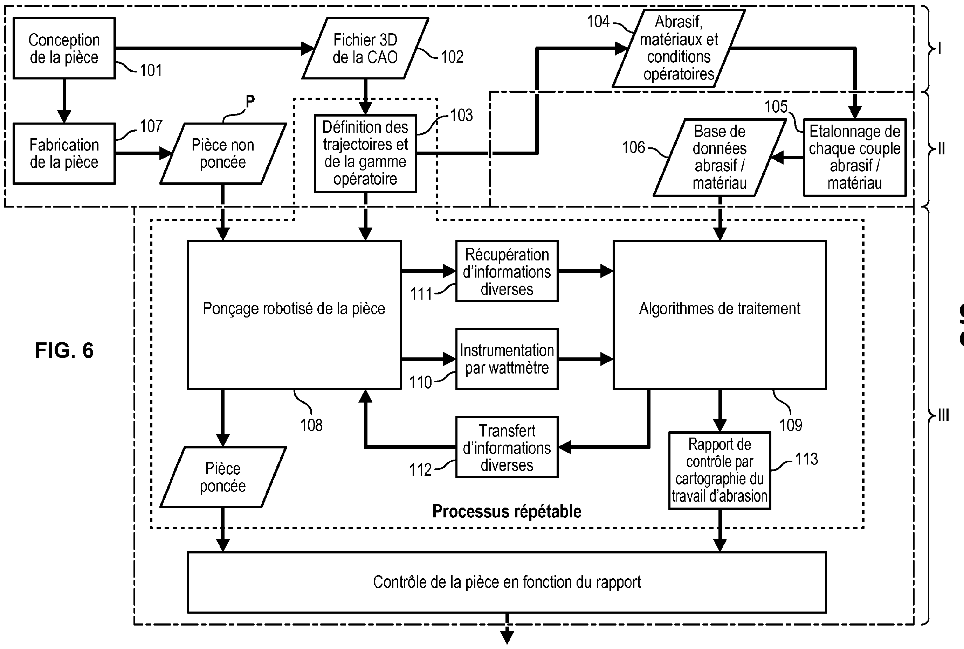

Les grandes étapes d'un traitement de surveillance d'un ponçage robotisé sont illustrées sur la figure 6.

Dans une première phase (phase I), la gamme de fabrication est conçue et définie.

À cet effet, la conception 101 de la pièce fournit un fichier 3D de CAO 102 à partir duquel sont calculées les trajectoires de la gamme opératoire de la ponceuse 8 à mouvement orbital (étape 103).

Ce calcul fournit le type d'abrasif ainsi que les conditions opératoires qui doivent être utilisés (données 104).

Une phase d'étalonnage (II) permet, pour chaque couple (abrasif)/(matériau poncé) de déterminer les différentes courbes seuils correspondant aux différents incidents que l'on souhaite pouvoir suivre (étape 105). Ces courbes sont chargées dans une base de données 106 de référence.

Lors du ponçage automatisé (phase III), le système robotisé décrit en référence à la figure 3 traite la pièce à poncer P fabriquée lors de la phase I (étape de fabrication 107). Il réalise le ponçage robotisé de la pièce P (étape 108) en fonction des trajectoires et de la gamme opératoire déterminées lors de l'étape 103. Il met en œuvre d'éventuels algorithmes de traitement (étape 109) modifiant les conditions opératoires du bras-robot 7 en fonction des comparaisons faites avec les courbes de référence fournies par la base de données 106, ainsi qu'en fonction du retour de puissance absorbée fourni par le mesureur de puissance 11 (instrumentation 110) et d'éventuelles autres informations (commande externe - récupération d'informations diverses 111). A cet effet, diverses informations sont transmises par le contrôleur de surveillance 12 au contrôleur 13 qui commande le bras-robot 7 (étape 112) pour commander ces modifications de conditions opératoires.

Des cartographies fournissant à l'opérateur une visualisation du travail de ponçage sur la pièce peuvent également être éditées ou affichées soit à l'issue de l'opération de ponçage, soit également en temps réel (étape 113). Ces cartographies permettent à l'opérateur un contrôle du ponçage de la pièce et la validation ou non de celle-ci. Le cas échéant, l'opérateur peut décider de reprendre le ponçage de certaines parties (reprise du processus en redéfinissant les trajectoires).

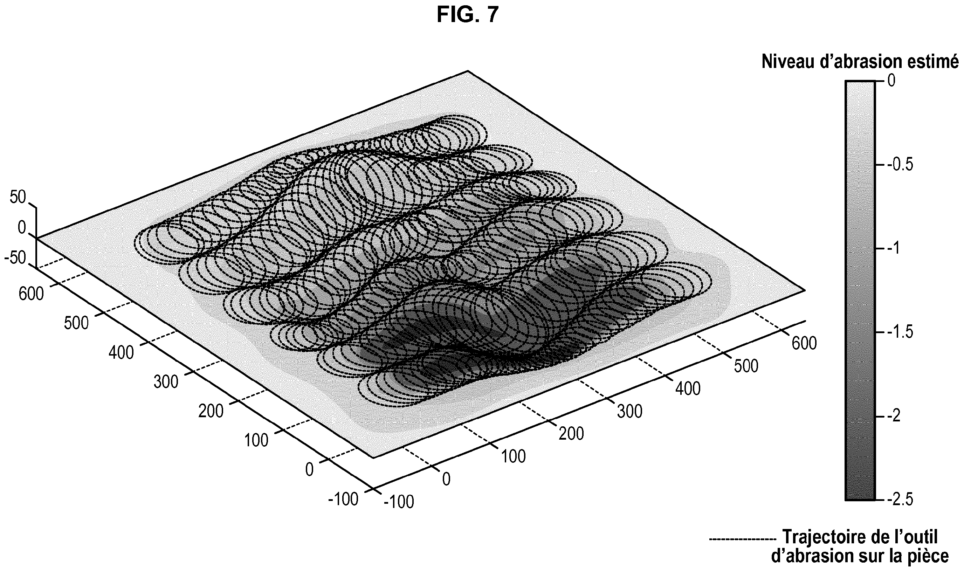

Sur la figure 7, les trajectoires de la ponceuse 8 sur la pièce sont associées à une cartographie avec une échelle colorimétrique ou un autre type de représentation qui indique à l'opérateur les zones où le ponçage a été réalisé de façon optimale et les zones où le niveau d'abrasion a été particulièrement faible. Cette cartographie associe une puissance consommée instantanée de la ponceuse à une position donnée de la trajectoire de ponçage.

Cet affichage ou une édition de cette cartographie permet alors à l'opérateur d'optimiser les changements d'outils et les stratégies de ponçage par rapport aux formes de la pièce.

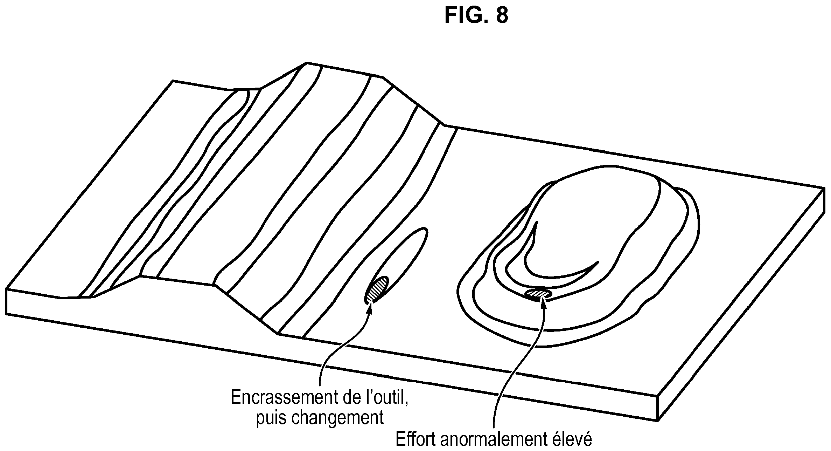

Un second exemple en figure 8 représente une visualisation simplifiée des niveaux d'abrasion estimée. Cette version facilite l'analyse et la prise de décision d'un opérateur pour localiser des zones de reprise potentielle. Elle permet également de préciser des incidents avec ou sans action corrective de la cellule robotisée. Ainsi, ce mode de visualisation permet d'éviter le contrôle systématique et minutieux de la qualité de toute la surface de la pièce poncée par l'opérateur.

Une projection de l'image sur la pièce, par vidéoprojecteur ou laser, peut être envisagée, surtout dans le cas de pièces de très grandes dimensions.

## Revendications

1. Procédé de contrôle d'un ponçage orbital robotisé, dans lequel une ponceuse orbitale à alimentation électrique est déplacée de façon automatisée, à pression constante, à la surface d'un objet, le long d'au moins une trajectoire de ponçage prédéfinie afin d'en réaliser le ponçage, dans lequel on mesure la puissance consommée instantanée de la ponceuse en différents points le long de la trajectoire de ponçage, dans lequel on traite la mesure ainsi réalisée pour en déduire une information sur le niveau d'abrasion le long de ladite trajectoire et/ou détecter un éventuel incident de ponçage le long de celle-ci,
**caractérisé en ce qu'**on affiche ou on édite une cartographie colorimétrique de la puissance consommée instantanée et/ou du niveau d'abrasion estimé en différents points de la trajectoire de ponçage, ladite cartographie associant une puissance consommée instantanée de la ponceuse à une position donnée de la trajectoire de ponçage.

2. Procédé selon la revendication 1, **caractérisé en ce qu'**on compare la courbe de l'évolution de la puissance consommée instantanée ou des courbes fonctions de celles-ci à une ou plusieurs courbes, seuils ou motifs de référence caractéristiques de la survenue de différents incidents, ces différentes courbes ou seuils de référence ayant été préalablement déterminés lors d'une phase d'étalonnage.

3. Procédé selon la revendication 2, **caractérisé en ce qu'**on constitue préalablement une base de données dans laquelle différentes courbes et/ou différents seuils et/ou motifs de référence sont mémorisés pour différents types de matériaux à poncer et différents types d'abrasifs susceptibles d'être utilisés pour leur ponçage.

4. Procédé selon l'une des revendications précédentes, **caractérisé en ce que** le traitement de la mesure de puissance consommée instantanée et/ou de son évolution est adapté pour détecter à tout instant le long de la trajectoire un défaut d'abrasion et/ou un niveau d'usure de l'abrasif de la ponceuse et/ou un incident de pression appliquée sur l'abrasif de la ponceuse et/ou un incident d'encrassement et/ou un incident d'aspiration et/ou un incident d'arrachage ou d'absence abrasif.

5. Procédé selon la revendication 4, **caractérisé en ce qu'**une telle détection déclenche en temps réel une action en réponse.

6. Procédé selon l'une des revendications précédentes, **caractérisé en ce qu'**on affiche ou on édite avec une échelle colorimétrique la puissance consommée instantanée et/ou le niveau d'abrasion estimé.

7. Système de contrôle d'un ponçage orbital robotisé réalisé au moyen d'une ponceuse orbitale à alimentation électrique déplacée de façon automatisée, à pression constante, à la surface d'un objet, le long d'au moins une trajectoire de ponçage prédéfinie afin d'en réaliser le ponçage, comportant un mesureur de la puissance consommée instantanée de la ponceuse en différents points le long de la trajectoire de ponçage et un contrôleur de surveillance adapté pour recevoir la puissance instantanée ainsi mesurée et pour traiter la mesure ainsi réalisée afin d'en déduire une information sur le niveau d'abrasion le long de ladite trajectoire et/ou détecter un éventuel incident de ponçage le long de celle-ci, ledit système étant **caractérisé par** des moyens pour l'affichage ou l'édition d'une cartographie colorimétrique de la puissance consommée instantanée et/ou du niveau d'abrasion estimé en différents points de la trajectoire de ponçage, ladite cartographie associant une puissance consommée instantanée de la ponceuse à une position donnée de la trajectoire de ponçage.

8. Système de ponçage orbital robotisé comportant une ponceuse orbitale à alimentation électrique et un robot adapté pour déplacer ladite ponceuse de façon automatisée, à pression constante, à la surface d'un objet, le long d'au moins une trajectoire de ponçage prédéfinie afin d'en réaliser le ponçage, **caractérisé en ce qu'**il comporte un système de contrôle selon la revendication 7.

## Patentansprüche

1. Steuerverfahren eines vollautomatischen Schwingschleifers, bei dem ein Schwingschleifer mit Stromversorgung automatisiert unter konstantem Druck an der Oberfläche eines Gegenstandes entlang wenigstens einer vordefinierten Schleifbahn verschoben wird, um das Schleifen derselben zu realisieren, wobei der Momentanwert der gesamten Leistungsaufnahme des Schleifers an unterschiedlichen Punkten entlang der Schleifbahn gemessen wird, wobei die auf diese Weise realisierte Messung bearbeitet wird, um daraus eine Information über das Abriebniveau entlang der genannten Bahn abzuleiten und / oder einen eventuellen Schleifzwischenfall entlang derselben zu detektieren,
**dadurch gekennzeichnet, dass** eine kolorimetrische Kartographie des Momentanwertes der gesamten Leistungsaufnahme und / oder des geschätzten Abriebniveaus an unterschiedlichen Punkten der Schleifbahn angezeigt oder bearbeitet wird, wobei die genannte Kartographie einen Momentanwert der gesamten Leitungsaufnahme des Schleifers einer bestimmten Position der Schleifbahn zugeordnet wird.

2. Verfahren gemäß Anspruch 1, **dadurch gekennzeichnet, dass** die Kurve der Entwicklung des Momentanwertes der gesamten Leistungsaufnahme oder Funktionskurven derselben mit einer oder mehreren charakteristischen Kurven, Schwellenwerten oder Referenzmustern des Eintritts von unterschiedlichen Zwischenfällen verglichen wird, wobei diese unterschiedlichen Kurven oder Referenz-Schwellenwerten zuvor in einer Eichungsphase bestimmt worden sind.

3. Verfahren gemäß Anspruch 2, **dadurch gekennzeichnet, dass** zuvor eine Datenbank erstellt wird, in der unterschiedliche Kurven und / oder unterschiedliche Schwellenwerte und / oder Referenzmuster für unterschiedliche, zu schleifende Materialtypen und unterschiedliche Abriebtypen, die für ihr Schleifen verwendet werden können, gespeichert werden.

4. Verfahren gemäß einem der voranstehenden Ansprüche, **dadurch gekennzeichnet, dass** der Momentanwert der gesamten Leistungsaufnahme und / oder seiner Entwicklung zum jederzeitigen Detektieren eines Abriebfehlers und / oder eines Verschleißniveaus des Abriebs des Schleifers und / oder eines Zwischenfalls des Drucks, der auf den Abrieb des Schleifers angewendet wird und / oder eines Verschmutzungszwischenfalls und / oder eines Ansaugzwischenfalls und / oder eines Abrisszwischenfalls oder Zwischenfalls eines fehlenden Abriebs entlang der Bahn geeignet ist.

5. Verfahren gemäß Anspruch 4, **dadurch gekennzeichnet, dass** eine derartige Detektion in Echtzeit eine Aktion als Antwort auslöst.

6. Verfahren gemäß einem der voranstehenden Ansprüche, **dadurch gekennzeichnet, dass** mit einer kolorimetrischen Skala der Momentanwert der gesamten Leistungsaufnahme und / oder das geschätzte Abriebniveau angezeigt oder bearbeitet wird.

7. System zur Steuerung eines vollautomatischen Schwingschleifers, das mittels eines automatisch verschobenen Schwingschleifers mit Stromversorgung, unter konstantem Druck an der Oberfläche eines Gegenstandes entlang wenigstens einer vordefinierten Schleifbahn realisiert wird, um dessen Schleifen zu realisieren, umfassend das Messen des Momentanwertes der gesamten Leistungsaufnahme des Schleifers an unterschiedlichen Punkten entlang der Schleifbahn und einen Überwachungsregler, der zum Empfangen des auf diese Weise gemessenen Momentanwertes der gesamten Leistungsaufnahme und zum Verarbeiten der auf diese Weise realisierten Messung geeignet ist, um davon eine Information über das Abriebniveau entlang der genannten Bahn zu detektieren und / oder einen eventuellen Schleifzwischenfall entlang derselben zu detektieren, wobei das genannte System durch die Mittel zum Anzeigen oder Bearbeiten einer kolorimetrischen Kartographie des Momentanwertes der gesamten Leistungsaufnahme und / oder des an unterschiedlichen Punkten der Schleifbahn geschätzten Abriebs gekennzeichnet ist, wobei die genannte Kartographie einen Momentanwert der gesamten Leistungsaufnahme des Schleifers einer bestimmten Position der Schleifbahn zuordnet.

8. System zum vollautomatischen Schwingschleifen, umfassend einen Schwingschleifer mit Stromversorgung und einen Roboter, der zum automatischen Verschieben des genannten Schleifers unter konstantem Druck an der Oberfläche eines Gegenstandes entlang wenigstens einer vorbestimmten Schleifbahn geeignet ist, um deren Schleifen zu realisieren, **dadurch gekennzeichnet, dass** es ein System zur Steuerung gemäß Anspruch 7 umfasst.

## Claims

1. Method for controlling an automated orbital sander, wherein an electrically powered orbital sander is moved around automatically, at constant pressure, over the surface of an object, along at least one predefined sanding path so as to perform sanding, wherein the instantaneous power consumed by the sander at different points along the sanding path is measured, the latter, wherein the measurement thus taken is processed in order to deduce therefrom information regarding the level of abrasion along said path and/or to detect any sanding incident that has occurred along the latter, **characterised in that** a calorimetry mapping is displayed or printed of the instantaneous power consumed and/or of the estimated level of abrasion at different points of the sanding path, said mapping associating an instantaneous power consumed of the sander with a given position of the sanding path.

2. Method according to claim 1, **characterised in that** the curve of the change in the instantaneous power consumed or function curves of the latter is compared with one or more curves, thresholds or reference patterns characteristic of the occurrence of various incidents, with these various curves or thresholds having been determined beforehand during a calibration phase.

3. Method according to claim 2, **characterised in that** a database is constituted beforehand wherein various curves and/or various thresholds and/or reference patterns are memorised for various types of materials to be sanded and various types of abrasives able to be used for the sanding thereof.

4. Method according to one of the preceding claims, **characterised in that** the processing of the measurement of the instantaneous power consumed and/or of the change thereof is adapted to detect at any instant along the path an abrasion defect and/or level of wear of the abrasive of the sander and/or a pressure incident applied on the abrasive of the sander and/or a fouling incident and/or an aspiration incident and/or a detaching incident or absence of abrasive.

5. Method according to claim 4, **characterised in that** such a detection triggers in real time an action in response.

6. Method according to one of the preceding claims, **characterised in that** the instantaneous power consumed and/or the estimated level of abrasion is displayed or printed with a calorimetric scale.

7. System for controlling an automated orbital sander carried out by means of an electrically powered orbital sander that is moved around automatically, at constant pressure, over the surface of an object, along at least one predefined sanding path so as to perform sanding, comprising a measurer of the instantaneous power consumed of the sander at different points along the sanding path and a monitoring controller adapted to receive the instantaneous power thus measured and to process the measurement thus taken in order to deduce therefrom information regarding the level of abrasion along said path and/or to detect any sanding incident that has occurred along the latter, said system being **characterised by** means for displaying or printing a calorimetry mapping of the instantaneous power consumed and/or of the estimated level of abrasion at different points of the sanding path, said mapping associating an instantaneous power consumed of the sander with a given position of the sanding path.

8. System for an automated orbital sander comprising an electrically powered orbital sander and a robot adapted to move sand sander automatically, at constant pressure, over the surface of an object, along at least one predefined sanding path so as to perform sanding, **characterised in that** it comprises a system for controlling according to claim 7.
